# EUROPEAN PATENT SPECIFICATION

(11) **EP 1 017 635 B1**
(45) Date of publication and mention of the grant of the patent: **21.02.2007**
(21) Application number: 98921271.7
(22) Date of filing: 19.05.1998
(51) Int. Cl.: C02F 1/48, F16L 55/24

(54) **REMOVAL OF CELL GROWTH FROM A BODY OF WATER**
VERHINDERUNG DES ZELLWACHSTUMS IN EINEM GEWÄSSER
SUPPRESSION DE LA PROLIFERATION CELLULAIRE DANS UN PLAN D'EAU

(30) Priority: 19.05.1997 AU PO688697
(43) Date of publication of application: 12.07.2000
(60) Divisional application: 06118401.6
(73) Proprietor: TELFER, David Brian, Runaway Bay, QLD 4216 (AU); Morris, Terence, Edward, Bundall, QLD 4217 (AU)
(72) Inventor: TELFER, David Brian, Runaway Bay, QLD 4216 (AU); Morris, Terence, Edward, Bundall, QLD 4217 (AU)
(74) Representative: Willquist, Bo Lorentz
(86) International application number: PCT/AU1998/000364
(87) International publication number: WO 1998/052876

(56) References cited:
- WO-A-93/08127
- WO-A-94/07790
- WO-A-95/08510
- WO-A-97/36828
- DE-A- 3 443 810
- GB-A- 2 240 732
- GB-A- 2 250 221
- GB-A- 2 261 834
- US-A- 3 753 886
- US-A- 4 065 386
- US-A- 4 524 079
- US-A- 5 037 546
- US-A- 5 326 446
- US-A- 5 326 530
- DATABASE WPI Week 199521, Derwent Publications Ltd., London, GB; Class D15, AN 1995-158144, XP002948735 & JP 07 080 467 A (GASTER KK) 28 March 1995

## Description

### TECHNICAL FIELD

This invention relates to a method and apparatus for the cleansing of bodies of water such as swimming pools, reservoirs, dams and the like. In particular, it is directed to the removal of bacteria, microbes and other cell growth from water.

### BACKGROUND ART

Large bodies of water such as swimming pools, water catchment areas and similar where the water therein is to be in subsequent contact with people (either by swimming or bathing in the body of water, or by drinking the water) requires cleansing. Although various filters incorporating a filtration medium such as sand can be used to remove particulate matter and other solid debris, the removal of harmful bacteria and other microbiological growth is more difficult Such bacteria and the like are usually removed by regularly dosing the body of water with a suitable chemical. For example, sodium hypochlorite is commonly added to swimming pools to maintain the dissolved chlorine content of the water at a level which is lethal to any bacteria and the like which is present in the water. In municipal works, where a body of water has to be purified to drinking water standards, a large range of chemicals may be added to the water to purify it.

There are a number of disadvantages to these existing methods. Swimming pools usually cannot be used until some period after treatment because the chlorine content necessary to purify the water often irritates the eyes of any person in the pool. In drinking water treatment, there is increasing concern by the community that the deliberate addition of chemicals into the water supply is harmful in itself. For example, it can lead to allergic reactions in some consumers of the treated water. Therefore, for an increasing number of consumers, it is necessary to filter or otherwise further treat the supplied water before it can be used or consumed. Of course, the use of chemicals and/or further treatment of supplied water all add to the financial costs of maintaining an acceptable supply of water for use by the community.

Various non-chemical methods for the removal of bacteria, microbes and other cell growth from a body of water are known. The closest prior art method is disclosed in WO94/07790. This method comprises sequentially applying an electromagnetic field of varying frequencies and ranges to a section of pipe or similar conduit communicable with the body of water as water passes therethrough for the purpose of inhibiting or removing said bacteria, microbes or other cell growth from said water wherein the application of the electromagnetic field to said section of pipe is achieved by magnetizing a coil wrapped around the exterior of the pipe.

This method creates only one magnetic field and the rotations of the coil of wire wrapped around the pipe act in concert to create one magnetic field of flux pattern. Further, due to the configuration of the coil, the flux pattern produced in the pipe is parallel to the direction of flow in the pipe, whether against the direction of flow or with it. Thus, only limited action of the magnetic field is occasioned on the fluid.

It is thus a general object of the present invention to overcome, or at least ameliorate, one or more of the above disadvantages.

### DISCLOSURE OF INVENTION

According to the present invention there is provided a method of for the removal of bacteria, microbes and other cell growth from a body of water, according to claim 1.

According to a further aspect of the present invention there is provided an apparatus for the removal of bacteria, microbes and other cell growth from a body of water, according to claim 7.

### BRIEF DESCRIPTION OF THE DRAWINGS

In order that the invention may be more readily understood and put into practical effect, reference will now be made to the accompanying drawings which illustrate a preferred embodiment of the invention and wherein:
Figure 1 illustrates the general nature of an apparatus not forming part of the present invention;

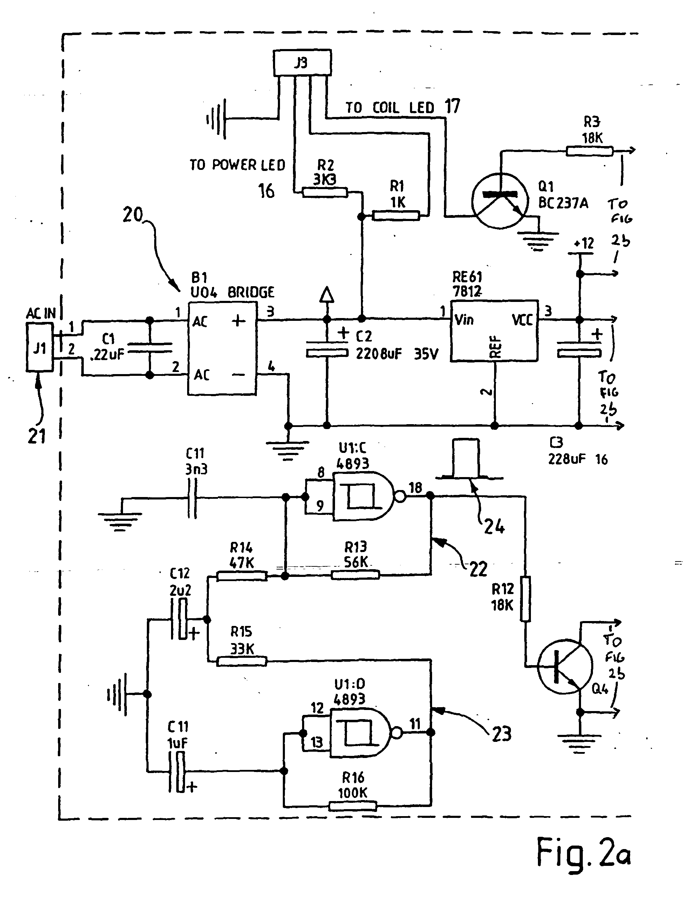

Figure 2a is a partial circuit diagram of the circuit for generating and applying a signal to a pipe with water flowing therethrough;

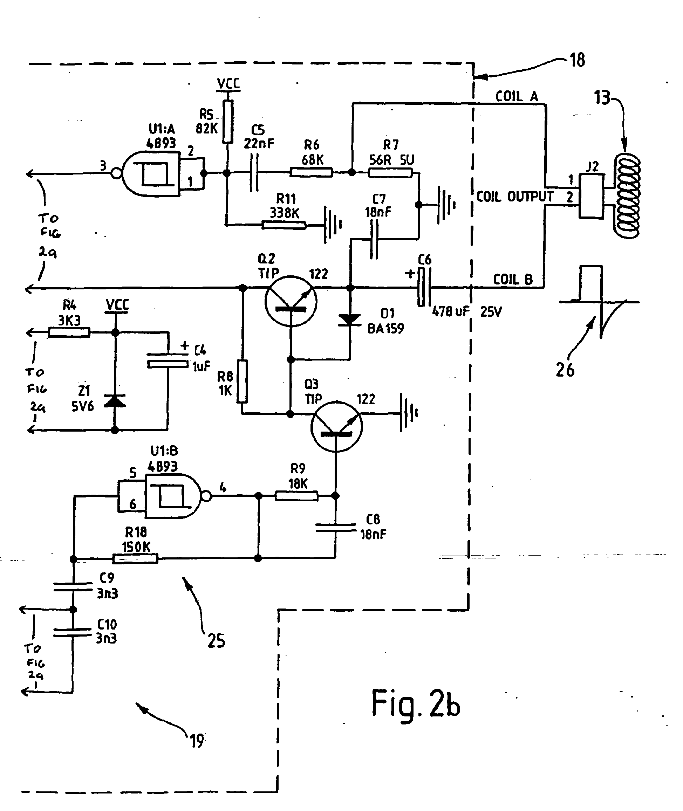

Figure 2b is a continuation of the partial circuit diagram illustrated in Figure 2a of the circuit for generating and applying a signal to a pipe with water flowing therethrough; and
Figure 3 illustrates the application of the apparatus of the invention to a swimming pool.
Figure 4 is a circuit diagram of an alternative circuit for generating and applying a signal to a pipe with water flowing therethrough, and
Figure 5 is a view of a section of pipe from a swimming pool filtration system having apparatus according to the present invention attached thereto, and
Figure 6 is a cross-sectional view of a pipe of a swimming pool installation having probes of the present invention positioned thereon, and
Figure 7 is a perspective view of the pipe band in accordance with another aspect of the present invention.

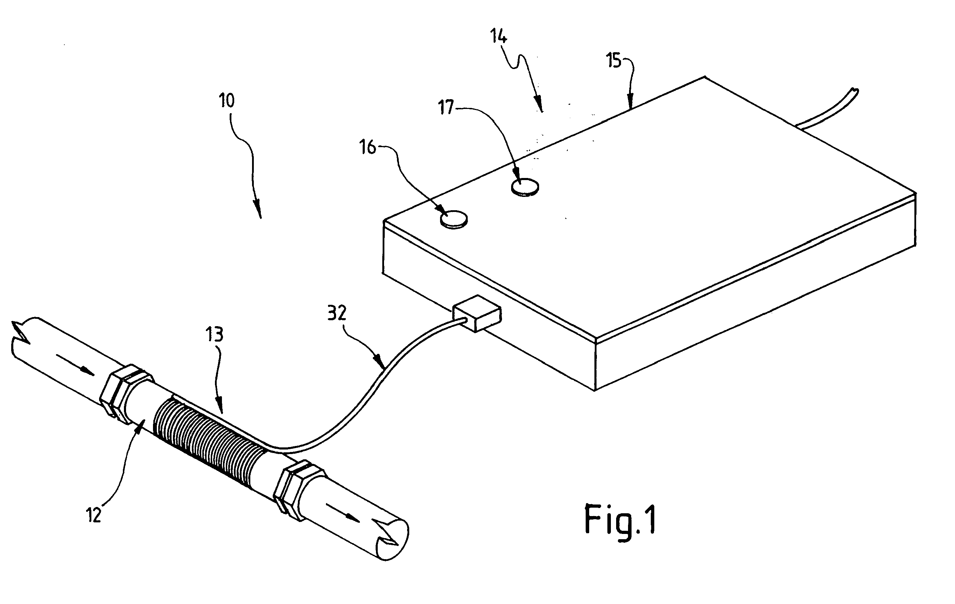

Referring firstly to Figure 1, which illustrates an embodiment not forming part of the invention, there is illustrated an apparatus 10 comprising a former 12 manufactured from a non-magnetic non-ferrous material such as a plastics material and preferably a polyvinyl chloride (PVC). Wound about the former 12 are a plurality of turns of wire forming to a coil 13 which is connected to receive a signal from a signal generator 14.

The former 12 is preferably 40 mm in diameter having wound thereon three layers of 0.315 mm insulated copper wire extending approximately 170 mm along the former 12. The former 12 may be provided with an outer casing to surround the windings or the layers of wire may be provided with a shrink sleeving.

The coil is adapted to be connected to a signal generator is housed within a casing 15 provided with an indicator 16 in the form of a light emitting diode (LED) which indicates circuit operation and a further indicator 17 in the form of a light emitting diode (LED) which indicates power supply to the apparatus 10. Mounted within the casing 15 is a circuit board 18 which carries the components of the signal generating circuit 19 and associated power supply 20.

The power supply 20 includes a bridge rectifier B1 and capacitator C1 which are arranged to be connected to an AC supply 21 to provide a pulsating DC voltage at the output of the rectifier B1 at a frequency in this embodiment of 100 Hz which is then applied to a capacitator C2 which filters and smooths to supply a DC voltage. This smoothed DC voltage is then applied to a regulator Reg1 which outputs a fixed DC voltage in this instance 12 volts which in conjunction with capacitator C3 provides a regulated 12 volt supply. Resistor R2 applies the voltage output from the bridge B1 to the externally mounted LED

Referring firstly to Figure 1, there is illustrated an apparatus 10 comprising a former 12 manufactured from a non-magnetic non-ferrous material such as a plastics material and preferably a polyvinyl chloride (PVC). Wound about the former 12 are a plurality of turns of wire forming to a coil 13 which is connected to receive a signal from a signal generator 14.

The former 12 is preferably 40 mm in diameter having wound thereon three layers of 0.315 mm insulated copper wire extending approximately 170 mm along the former 12. The former 12 may be provided with an outer casing to surround the windings or the layers of wire may be provided with a shrink sleeving.

The coil is adapted to be connected to a signal generator is housed within a casing 15 provided with an indicator 16 in the form of a light emitting diode (LED) which indicates circuit operation and a further indicator 17 in the form of a light emitting diode (LED) which indicates power supply to the apparatus 10. Mounted within the casing 15 is a circuit board 18 which carries the components of the signal generating circuit 19 and associated power supply 20.

The power supply 20 includes a bridge rectifier B1 and capacitator C1 which are arranged to be connected to an AC supply 21 to provide a pulsating DC voltage at the output of the rectifier B1 at a frequency in this embodiment of 100 z which is then applied to a capacitator C2 which filters and smooths to supply a DC voltage. This smoothed DC voltage is then applied to a regulator Reg1 which outputs a fixed DC voltage in this instance 12 volts which in conjunction with capacitator C3 provides a regulated 12 volt supply. Resistor R2 applies the voltage output from the bridge B1 to the externally mounted LED 16 which indicates that power is supplied to the circuit. The resistor R2 limits the current flowing to the LED 16.

The resistor R4, Zener diode Z1 and capacitor C4 form a further power supply (VCC), preferably a 5 volts DC supply, to be applied to the signal generator circuit 19. Alternatively, a further regulator may be used to supply a regulated output for supply to the circuit 19.

The signal generating circuit 19 is primarily formed about a quad and gate Schmitt trigger which in this embodiment comprise a type 4093 CMOS Integrated Circuit U1 which has four separate gates designated U1:A, U1:B, U1:C and U1:D. The gates U1:B, U1:C and U1:D are used as oscillators as described below.

The gate U1:C forms an oscillator 22 with resistor R13 and capacitator CII whose normal frequency of oscillation as determined by resistor R13 and capacitator CII is 10 Hz. The gate UI :D is configured as an oscillator 23 with resistor R16 and capacitator C13 which set the normal frequency of oscillation at 7 KHz. Both oscillators 22 and 23 provide a positive going square wave output. The output of the oscillator 23 is connected to the input of the oscillator 22 though resistors R13 and R14 and capacitor C12 which is charged and discharged by the output of the oscillator 23 to apply a modulating signal to the input of the oscillator 22. The output of the oscillator 22 is thus a modulated positive going square wave of the form illustrated schematically at 24 where frequency varies as determined by the output of the oscillator 23. The average frequency of this output signal is 3.8 KHz.

This output signal is applied via resistor R12 to the base of a transistor Q4 and the varying frequency of the signal 24 serves to switch transistor Q4 on and off at the varying frequency. The purpose of R12 is to limit the current to the base of transistor Q4.

The gate U1:B in is connected with resistor R10 and capacitors C9 and C10 to form a further oscillator 25 whose output is normally a positive going square wave. As with the oscillators 22 and 23, the frequency of this oscillator is controlled by the values of its associates resistor and capacitor in this case resistor R10 and capacitors C9 and C10. The oscillator 25 would normally run at a frequency of 2.6 KHz. The capacitors C9 and C10 are connected in series and are of the same value so that the capacitance of the series capacitors C9 and C10 is half the total capacitance of the capacitors. This oscillator 25 is modulated by the output signal 24 of the oscillator 22 applied through the transistor Q4. The capacitors C9 and C10 are connected to the collector of the transistor Q4 which when switched on and off the shunts the capacitor C9 to ground at a frequencies determined by the variable frequencies of the output signal 24. The effect of this switching is to double the capacitance of the series capacitors C9 and C10 every time the transistor Q4 is switch on. This therefore halves the output frequency at output of the oscillator 25.

The output of the oscillator 25 is connected via an R-C circuit formed by resistor R9 and capacitator C8 to a Darlington pair of transistors Q3 and Q2 which amplify the signal and apply the amplified signal to the positive plate of a capacitor C6. The capacitor C6 isolates DC voltages at the more negative plate and applies the signal to the coil 13 via a connector J2. When the coil 13 is connected, the signal passes through the coil 13 and returns to the ground via resistor R7. The signal applied to the coil 13 as indicated at 26 comprises a positive going square wave and a negative spike which returns through an exponential curve to zero.

The fourth gate U1:A of the integrated circuit U1, is used as a detector to show that the coil 13 is operating. Resistors R5 and R11 form a voltage divider connected to the voltage VCC and applying an input to the gate U1:A. The input of the gate U1:A is also connected via capacitor C5 and resistor R6 to the coil 13.

When the coil 13 is not connected or operating the voltage applied by the voltage divider R5 and R11 to the input of the gate U1:A causes the output of the gate U1:A to be low. When the coil 13 is operating, the input voltage to the gate U1:A is lowered by capacitor C5 AC coupling this voltage to R6. When the input voltage goes below the trip point of the Schmitt trigger U1:A, the output of the gate U1:A goes high thus supplying a voltage to resistor R3 which is connected to the base of transistor Q1 and serves to limit the current to the transistor Q1. When this current limited voltage is applied to the transistor Q1 and current limiting resistor R1 and thus is illuminated when the coil 13 is connected and operating. Thus LED 17 serves as a coil operating indicator.

When the coil 13 is removed or not operating the transistor Q1 is witched off due to an absence of base current and the LED 17 goes out. Both LED 16 and LED 17 are preferably connected externally through connector J3.

The output to the coil connector or jack J2 comprises a jumble or range of frequencies generated by the gated U1:C and U1:D. As stated above both U1:C and U1:D are connected as separate oscillators with the output of U1:D being applied to the input of U1:C. The oscillator 22 including gate U1:C provides substantially higher frequency than the oscillator circuit 23-which includes gate U1:D. Thus if disconnected from each other, the oscillator 22 of U1:C will provide a frequency of approximately 10 Hz and that of U1:D approximately 7 KHz. The combined circuit generates a sweep of frequencies usually in the range of I KHz to 7 KHz.

It is however within the scope of the present invention to provide an oscillator circuit which provides a single frequency output or a range of frequencies beyond the above range for application to the coil. Appropriate frequency selection is made in accordance with the nature of the cell growth and/or the quality of water flowing through the pipe.

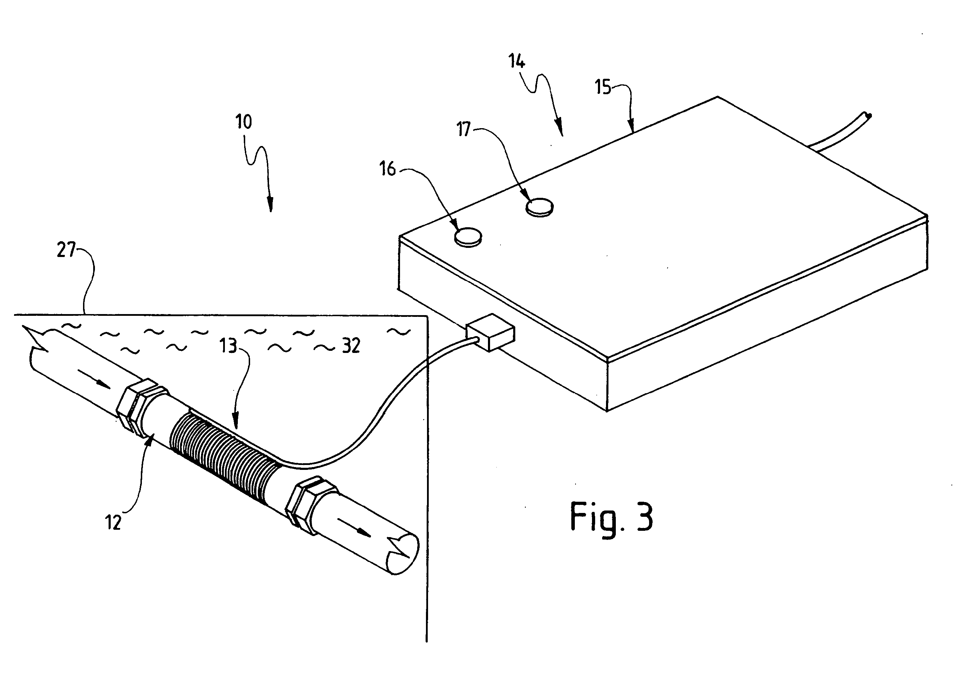

In use and as shown in Figure 3, the apparatus of the invention may be suitably applied to an installation 27 representing a swimming pool. The former 12 carrying the coil 13 is located about the pipe 12 and is placed in the pool below the surface of the water. The signal generator 14 housed in the housing 15 is mounted in any suitable location and connected to the coil 13 through the wires 32.

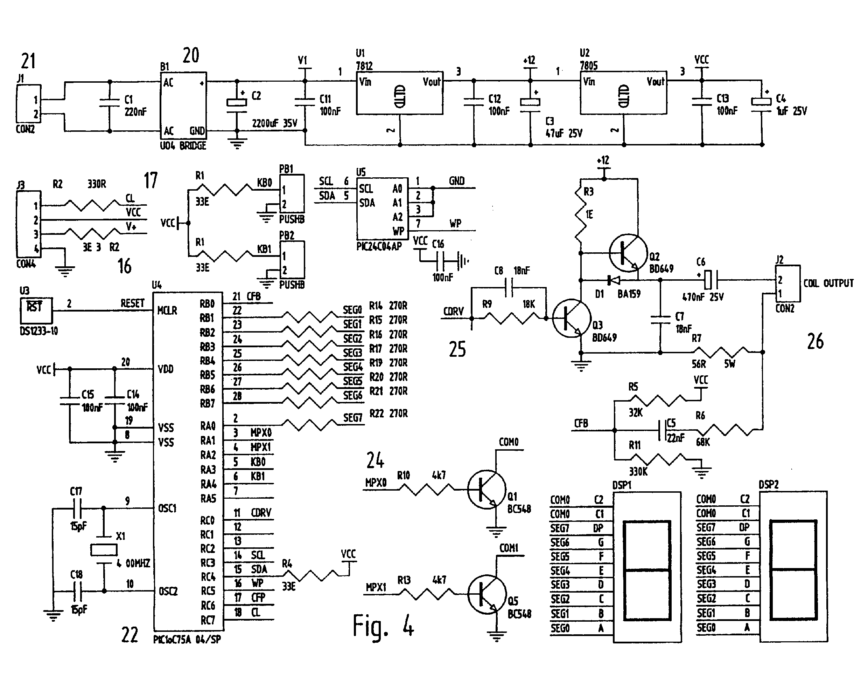

With respect to Figures 4 of the drawings, and in accordance with a further aspect of the present invention a signal is primarily generated from a single-ship microcontroller 22 which in this embodiment comprises a type PIC 16C73A microcontroller. The 4.00 Mhz crystal X1 and two 15pF capacitors C17 and C18 form the base frequency oscillator for the microcontroller. C14 and C15 serve as by-pass capacitors that stabilize the power supply to the microcontroller. The DS1233-10 reset unit ensures the microcontroller starts successfully on every power up.

The microcontroller generates an internal square waive signal at 10 Hz modulated at 7kHz producing a signal with an average frequency of 3.8kHz. This signal is used to vary the frequency of a third oscillator, the third oscillator normally running at a frequency of 2.6 kHz. The effect of the signal

Transistors Q1 and Q5 serve to multiplex the display of numbers. A number display may be applied to DSP1 only by the microcontroller turning on Q1 and turning off Q5. To display a number on DSP2 the microcontroller turns on Q5 and turns off Q1. By alternating this process at approximately 60 times a second, the human eye will not be able to detect any amount of flickering due to the displays repeatedly being switched on and off.

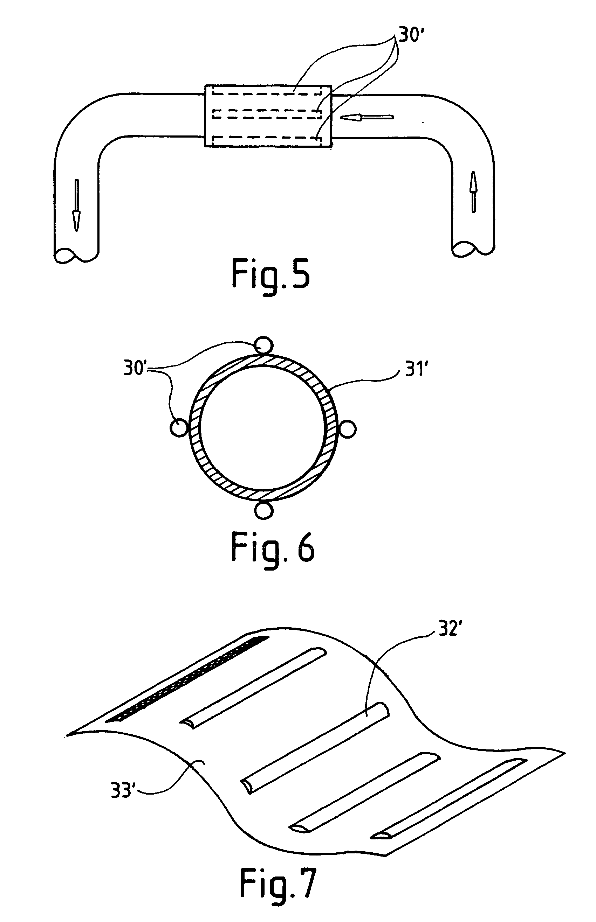

Figures 5 to 7 of the drawings illustrates a section of piping in a swimming pool installation to which probes of an apparatus according to another aspect of the present invention are attached. A plurality of probes 30' having electrical connection to the output of the signal generating apparatus of Figure 4 are positioned on the outer surface of a suction of pipe 31'. The probes 30' may be in the form of elongate bars of a ferrite material. Our trials to date have indicated that manganese-zinc supplied by NEOSID AUST. PTY LIMITED and identified by the code F8 is a suitable material. Good results have been achieved by using one to five probes 30'. According to data provided by NEOSID AUST. PTY LIMITED their F8 coded ferrite material has an optimum frequency range of between .1 and .5 MHz. A convenient manner of attaching the probes is to enclose individual probes within equally spaced pockets 32' of a band 33'. The band 33' can be mounted on a section of pipe and secured using Velcro or like attachments.

The use of the method and apparatus of the present invention should thus at least reduce the costs of maintaining a healthy water supply by means which are both more environmental friendly and more acceptable to the general community:
times a second, the human eye will not be able to detect any amount of flickering due to the displays repeatedly being switched on and off.

Figures 5 to 7 of the drawings illustrates a section of piping in a swimming pool installation to which probes of an apparatus according to another aspect of the present invention are attached. A plurality of probes 30' having electrical connection to the output of the signal generating apparatus of Figure 4 are positioned on the outer surface of a suction of pipe 31'. The probes 30' may be in the form of elongate bars of a ferrite material. Our trials to date have indicated that manganese-zinc supplied by NEOSID AUST. PTY LIMITED and identified by the code F8 is a suitable material. Good results have been achieved by using one to five probes 30'. According to data provided by NEOSID AUST. PTY LIMITED their F8 coded ferrite material has an optimum frequency range of between 1 and .5 MHz. A convenient manner of attaching the probes is to enclose individual probes within equally spaced pockets 32' of a band 33'. The band 33' can be mounted on a section of pipe and secured using Velcro or like attachments.

The use of the method and apparatus of the present invention should thus at least reduce the costs of maintaining a healthy water supply by means which are both more environmental friendly and more acceptable to the general community.

## Claims

1. A method of for the removal of bacteria, microbes and other cell growth from a body of water, said method comprising:
applying an electro-magnetic field to a section of pipe or similar conduit (31') communicable with the body of water as water passes therethrough, said electro- magnetic field having a frequency or a range of frequencies sufficient to inhibit or remove said bacteria, microbes or other cell growth from said water,
wherein the application of the electro magnetic field to said section of pipe is achieved by magnetizing an element positioned on the wall of the pipe or conduit (31'),
wherein said magnetization is achieved by providing a signal to said element,
said signal having the form of a positive going square wave followed by a negative going spike having a variable frequency,
**characterised in that**
said element comprises a plurality of probes (30') comprising elongate bars of ferrite material, which probes are disposed on an outer wall of the section of pipe or similar conduit and which probes extend lengthwise of an axis of the pipe or similar conduit (31').

2. A method as claimed in claim 1, wherein four equally spaced elements are placed on the wall of the pipe or conduit.

3. A method as claimed in claim 4-1, wherein the ferrite material is manganise-zinc.

4. A method as claimed in any one of the preceding claims, wherein an AC voltage is applied to the magnetizable element to generate the electro-magnetic field.

5. A method as claimed in claim 4, wherein the voltage is 5 volts AC.

6. A method as claimed in claims 4 or 5, wherein the frequency of the voltage applied to the magnetizable element varies to sweep a range of frequencies in the range of 2 KHz to 7KHz.

7. Apparatus for the removal of bacteria, microbes and other cell growth from a body of water, said apparatus comprising:
a magnetizable element adapted to be disposed about a section of a pipe or similar conduit (31') communicable with the body of water;
means (14) for applying a signal to said magnetizable element to create an electromagnetic field within said pipe, said electro- magnetic field having a frequency or a range of frequencies sufficient to inhibit or remove said bacteria, microbes or other cell growth from said water,
said signal application means (14) being arranged to provide said signal in the form of a positive going square wave followed by a negative going spike having a variable frequency,
**characterised in that**
said magnetizable element comprises a plurality of probes (30') comprising elongate bars of ferrite material, which probes are disposed on an outer wall of the section of pipe or similar conduit and which probes extend lengthwise of an axis of the pipe or similar conduit (31').

8. Apparatus as claimed in claim 7, wherein the one or more ferrite elements are manganese-zinc elements.

9. Apparatus claimed in any one of claims 7 or 8, wherein said signal application means is arranged to apply an AC voltage to the magnetizable element to generate the electro-magnetic field.

10. Apparatus as claimed in claim 9, wherein the voltage is 5 volts AC.

11. Apparatus as claimed in claims 9 or 10, wherein the frequency of the voltage applied to the magnetizable element varies to sweep a range of frequencies in the range of 2 KHz to 7KHz.

12. Apparatus as claimed in any one of claims 7 to 11, wherein said signal application means comprises first and second square wave oscillators whereby the output of the second oscillator is modulated in frequency by the output of the first oscillator.

13. Apparatus as claimed in any one of claims 7 to 12, wherein said signal application means also includes a third square wave oscillator, whereby the output of the second oscillator is used to frequency modulate the output of the third square wave oscillator.

14. Apparatus as claimed in claim 13, wherein said signal application means comprises amplifier means for amplifying the output of the third square wave oscillator, and wherein the output of the amplifier means is adapted to be connected to the magnetizable element via capacitance means to define the required form of the signal.

## Patentansprüche

1. Verfahren zur Entfernung von Bakterien, Mikroben und anderem Zellwachstum aus einem Gewässer, wobei das Verfahren umfasst:
Anlegen eines elektromagnetischen Feldes an einen Abschnitt eines Rohres oder einer ähnlichen Leitung (31'), das bzw. die mit dem Gewässer in Verbindung tritt, wenn Wasser hindurch fließt, wobei das elektromagnetische Feld eine Frequenz oder einen Bereich von Frequenzen aufweist, die bzw. der ausreichend ist, um die Bakterien, Mikroben oder anderes Zellwachstum aus dem Wasser zu hemmen oder zu entfernen,
worin das Anlegen des elektromagnetischen Feldes an den Abschnitt des Rohres durch Magnetisieren eines Elementes erreicht wird, das an der Wand des Rohres oder der Leitung (31') positioniert ist,
worin die Magnetisierung **dadurch** erreicht wird, dass ein Signal an das Element gegeben wird,
wobei das Signal die Form eines positiven Rechtecksignals hat, gefolgt von einer negativen Spitze mit einer variablen Frequenz,
**dadurch gekennzeichnet,**
**dass** das Element eine Vielzahl an Fühlern (30') umfasst, die länglichen Stäbe aus Ferritmaterial umfassen, wobei die Fühler an einer Außenwand des Abschnitts des Rohres oder der ähnlichen Leitung angeordnet sind und die Fühler sich entlang einer Achse des Rohres oder der ähnlichen Leitung (31') erstrecken.

2. Verfahren nach Anspruch 1, worin vier äquidistante Elemente an der Wand des Rohres oder der Leitung angeordnet sind.

3. Verfahren nach Anspruch 1, worin das Ferritmaterial Mangan-Zink ist.

4. Verfahren gemäß einem der vorhergehenden Ansprüche, worin eine Wechselspannung an das magnetisierbare Element angelegt wird, um das elektromagnetische Feld zu erzeugen.

5. Verfahren nach Anspruch 4, worin die Spannung 5 Volt Wechselstrom beträgt.

6. Verfahren nach einem der Ansprüche 4 oder 5, worin die Frequenz der an das magnetisierbare Element angelegten Spannung variiert, um einen Frequenzbereich im Bereich von 2 KHz bis 7 KHz abzudecken.

7. Apparat zur Entfernung von Bakterien, Mikroben und anderem Zellwachstum aus einem Gewässer umfassend:
ein magnetisierbares Element, das dafür ausgerichtet ist, um einen Abschnitt eines Rohres oder einer ähnlichen Leitung (31') herum angeordnet zu werden, das bzw. die mit dem Gewässer in Verbindung treten kann;
Mittel (14), um ein Signal an das magnetisierbare Element anzulegen, um ein elektromagnetisches Feld innerhalb des Rohres zu erzeugen, wobei das elektromagnetische Feld eine Frequenz oder einen Frequenzbereich hat, der ausreichend ist, um die Bakterien, Mikroben oder anderes Zellwachstum aus dem Wasser zu hemmen oder zu entfernen,
wobei die Mittel zum Anlegen des Signals (14) so angeordnet sind, dass sie das Signal in Form eines positiven Rechtecksignals abgeben, gefolgt von einer negativen Spitze mit einer variablen Frequenz,
**dadurch gekennzeichnet,**
**dass** das magnetisierbare Element eine Vielzahl an Fühlern (30') umfasst, die länglichen Stäbe aus Ferritmaterial umfassen, wobei die Fühler an einer Außenwand des Abschnitts eines Rohres oder einer ähnlichen Leitung angeordnet sind und die Fühler sich entlang einer Achse des Rohres oder der ähnlichen Leitung (31') erstrecken.

8. Apparat nach Anspruch 7, worin das eine oder die mehreren Ferritelemente Mangan-Zink Elemente sind.

9. Apparat gemäß einem der Ansprüche 7 oder 8, worin die Mittel zum Anlegen des Signals angeordnet sind, um eine Wechselspannung an das magnetisierbare Element anzulegen, um das elektromagnetische Feld zu erzeugen.

10. Apparat gemäß Anspruch 9, worin die Spannung 5 Volt Wechselstrom beträgt.

11. Apparat gemäß Anspruch 9 oder 10, worin die Frequenz der an das magnetisierbare Element angelegten Spannung variiert, um einen Frequenzbereich im Bereich von 2 KHz bis 7 KHz abzudecken.

12. Apparat gemäß einem der Ansprüche 7 bis 11, worin die Mittel zum Anlegen des Signals erste und zweite Rechtecksignal-Oszillatoren umfassen, wobei der Ausgang des zweiten Oszillators in der Frequenz durch den Ausgang des ersten Oszillators moduliert wird.

13. Apparat gemäß einem der Ansprüche 7 bis 12, worin die Vorrichtung zum Anlegen eines Signals auch einen dritten Rechtecksignal-Oszillator einschließt, wobei der Ausgang des zweiten Oszillators dazu verwendet wird, um die Frequenz des Ausgangs des dritten Rechtecksignal-Oszillators zu modulieren.

14. Apparat gemäß Anspruch 13, worin die Mittel zum Anlegen eines Signals Verstärkungsmittel zum Verstärken des Ausgangs des dritten Rechtecksignal-Oszillators umfassen, und worin der Ausgang der Verstärkermittel dafür ausgerichtet ist, um an das magnetisierbare Element über Kapazitätsmittel verbunden zu werden, um die erforderliche Form des Signals zu definieren.

## Revendications

1. Procédé d'élimination de bactéries, de microorganismes et d'une autre croissance cellulaire dans de l'eau, ledit procédé comprenant :
appliquer un champ électromagnétique à une section de tuyau ou conduit similaire (31') pouvant communiquer avec l'eau à mesure que l'eau passe à l'intérieur de celui-ci, ledit champ électromagnétique ayant une fréquence ou une plage de fréquences suffisante pour inhiber ou éliminer lesdites bactéries, microorganismes ou autre croissance cellulaire de ladite eau,
dans lequel l'application du champ électromagnétique à ladite section de tuyau se fait par magnétisation d'un élément positionné sur la paroi du tuyau ou conduit (31'),
dans lequel ladite magnétisation se termine en envoyant un signal audit élément,
ledit signal ayant la forme d'une onde carrée de sens positif suivie d'une pointe de sens négatif ayant une fréquence variable,
**caractérisé en ce que** ledit élément comprend une pluralité de capteurs (30') qui comprennent des barreaux allongées en matériau ferrite, lesdits capteurs étant disposés sur une paroi extérieure de la section de tuyau ou conduit similaire et lesdits capteurs s'étendant dans le sens de la longueur d'un axe du tuyau ou conduit similaire (31').

2. Procédé selon la revendication 1, dans lequel quatre éléments également espacés sont placés sur la paroi du tuyau ou conduit.

3. Procédé selon la revendication 1, dans lequel le matériau ferrite est le manganèse-zinc.

4. Procédé selon l'une quelconque des revendications précédentes, dans lequel une tension alternative est appliquée à l'élément magnétisable afin de générer le champ électromagnétique.

5. Procédé selon la revendication 4, dans lequel la tension est de 5 volts alternatifs.

6. Procédé selon la revendications 4 ou la revendication 5,
dans lequel la fréquence de la tension appliquée à l'élément magnétisable varie de façon à balayer une plage de fréquences allant de 2 KHz à 7 KHz.

7. Appareil pour éliminer des bactéries, des microorganismes et une autre croissance cellulaire dans de l'eau, ledit appareil comprenant :
un élément magnétisable adapté pour être disposé autour d'une section de tuyau ou conduit similaire (31') qui peut communiquer avec l'eau,
des moyens (14) pour appliquer un signal audit élément magnétisable afin de créer un champ électromagnétique dans ledit tuyau, ledit champ électromagnétique ayant une fréquence ou une plage de fréquences suffisante pour inhiber ou éliminer lesdites bactéries, microorganismes ou autre croissance cellulaire dans ladite eau,
lesdits moyens d'application du signal (14) étant agencés pour fournir ledit signal sous la forme d'un onde carrée de sens positif suivie d'une pointe de sens négatif ayant une fréquence variable,
**caractérisé en ce que** ledit élément magnétisable comprend une pluralité de capteurs (30') qui comprennent des barreaux allongées en matériau ferrite, lesdits capteurs étant disposés sur une paroi extérieure de la section de tuyau ou conduit similaire et lesdits capteurs s'étendant dans le sens de la longueur d'un axe du tuyau ou conduit similaire (31').

8. Appareil selon la revendication 7, dans lequel lesdits un ou plusieurs éléments en ferrite sont des éléments en manganèse-zinc.

9. Appareil selon l'une quelconque des revendications 7 ou 8, dans lequel lesdits moyens d'application du signal sont agencés pour appliquer une tension alternative à l'élément magnétisable afin de générer le champ électromagnétique.

10. Appareil selon la revendication 9, dans lequel la tension est de 5 volts alternatifs.

11. Appareil selon l'une quelconque des revendications 9 ou 10, dans lequel la fréquence de la tension appliquée à l'élément magnétisable varie de façon à balayer une plage de fréquences allant de 2 KHz à 7 KHz.

12. Appareil selon l'une quelconque des revendications 7 à 11, dans lequel lesdits moyens d'application du signal comprennent des premier et deuxième oscillateurs à onde carrée, la sortie du deuxième oscillateur étant modulée en fréquence par la sortie du premier oscillateur.

13. Appareil selon l'une quelconque des revendications 7 à 12, dans lequel lesdits moyens d'application du signal comprennent également un troisième oscillateur à onde carrée, la sortie du deuxième oscillateur étant utilisée pour moduler en fréquence la sortie du troisième oscillateur à onde carrée.

14. Appareil selon la revendication 13, dans lequel lesdits moyens d'application du signal comprennent des moyens d'amplification pour amplifier la sortie du troisième oscillateur à onde carrée et dans lequel la sortie des moyens d'amplification est adaptée pour être reliée à l'élément magnétisable par l'intermédiaire de moyens de capacité afin de définir la forme requise pour le signal.
